# NEW EUROPEAN PATENT SPECIFICATION

(11) **EP 3 424 323 B2**
(45) Date of publication and mention of the opposition decision: **09.02.2022**
(45) Mention of the grant of the patent: 05.06.2019
(21) Application number: 17175541.6
(22) Date of filing: 12.06.2017
(51) Int. Cl.: A01N 37/42, A01N 43/653, A01P 21/00, A01N 25/04

(54) **GROWTH REGULATOR PROHEXADIONE CALCIUM AND PROTHIOCONAZOLE**
WACHSTUMSREGULATOR UND FUNGIZID
RÉGULATEUR DE CROISSANCE ET FONGICIDE

(43) Date of publication of application: 09.01.2019
(73) Proprietor: Fine Agrochemicals Limited, Worcester WR5 2RQ (GB)
(72) Inventor: WIKELEY, Philip Simon, WorcestershireWR14 1 PG (GB); REIGNARD, Joëlle, 69330 Meyzieu (FR)
(74) Representative: Hoyng Rokh Monegier B.V.

(56) References cited:
- EP-A2- 2 409 570
- WO-A1-2012/126990
- WO-A1-2012/167091
- WO-A1-2015/024995
- WO-A2-2007/042406
- WO-A2-2007/068421
- WO-A2-2010/063446
- WO-A2-2010/081646
- WO-A2-2010/149504
- WO-A2-2011/110583
- CN-A- 101 213 964
- CN-A- 103 814 901
- CN-A- 104 222 103
- US-A1- 2005 032 648
- US-A1- 2005 032 648
- US-A1- 2009 144 861
- US-A1- 2016 192 656
- Anonymous: "Tank-mix sheet", Bayer Cropscience, 1 January 2014 (2014-01-01), page 1,
- Anonymous: "Environmental Information Sheet Proline® 275 MAPP 14790", EIS version 6 EIS version 6, 1 February 2017 (2017-02-01), pages 1-2, Retrieved from the Internet: URL:https://voluntaryinitiative.org.uk/med ia/1312/proline-275-version-6-guideline-ve rsion-4.pdf [retrieved on 2020-06-03] & {Product Label von Proline®275) & (Auszug aus dem Product Manual 2011, Bayer CropScience betreffend Proline®275; Deckblatt; Inhaltsverzeichnis; Seiten 500-511)
- Anonymous: "Environmental Information Sheet CANOPY MAPP 16314", EIS version 3 EIS version 3, 1 September 2016 (2016-09-01), pages 1-3, Retrieved from the Internet: URL:https://www.agricentre.basf.co.uk/Docu ments/product_files_uk_files/recent_update s_files/eis_files/canopy_eis_1.pdf [retrieved on 2020-06-03] & (Decision Guide to Canopy Management in Cereals von BASF) & (Nutzerbroschure Medax® Top) & (Registration Report Part A Medax® Top)
- ASTM standard E 1518-05
- (G.S. Chahal et al., Crop Protection, 2012,41. 150-157)
- (Product Label Provost® 433 SC Fungicide)
- Decoy label BASF, prothioconazole

## Description

### Field of the invention

The invention relates to a combination of the growth regulator prohexadione calcium and the fungicide prothioconazole in a method to treat plants. The invention also relates to a concentrate comprising the both compounds for use in agriculture. Furthermore, the invention relates to use of said growth regulator and fungicide in crops, preferably broad acre crops like rape seed oil crop and cereal crops.

### Background of the invention

In many horticultural and agricultural applications, growth regulators (growth inhibitors or growth stimulants) are applied for a variety of reasons. For example, it can be useful to increase the speed of growth, increase root formation, seedling setting and the like. It may also be useful to reduce growth in order to have short stems in grain culturing, reduce seed formation in citrus fruits and the like.

In many horticultural and agricultural applications, fungicides are regularly applied, in order to combat diseases caused by fungi.

Many of the growth regulators, insecticides, fungicides, herbicides and the like are applied on the crop by spraying in a diluted solution in water.

Generally, the farmer appreciates to use concentrated products, like liquid formulations that can easily be admixed with water to result in homogeneous mixtures without additional process steps. Furthermore, often, a farmer wants to apply several active compounds in one spray run. Hence, active compounds are generally supplied as concentrated liquids.

CN103814901 and WO2015//024995 for example suggest to combine prohexadion with fungicides or other active compounds in agricultural treatments.

NZ566983 describes a combination of epoxiconazole with trinexapac, that is suggested to have a synergistic fungicidal effect
US2005/032648 describes trinexepac-ethyl with a further inhibitor for gibberellin synthesis for use on turf grass. WO2010/063446 describes trinexepac-ethyl with jasmonites for improving turf grass. WO2012/126990 describes trinexepac-ethyl with azoxystrobin for use on maize. WO2012/167091 describes azostrobin with trinexepac-ethyl for improving yield under drought stress. WO2010/081646 describes the use of prothioconazole with plant growth regulators like trinexepac-ethyl for improved fungicide effect; CN104222103 describes the use of prohexadione calcium with for example paclobutrazol for lawn grass. CN101213964 describes the use of the combination paclobutrazol and prohexadione calcium for reducing growth in peanuts.

Further WO2011/110583 and EP2409570 both describe mixtures of a variety of fungicides, wherein one of the fungicides may be protioconazole, which mixtures may further comprise a growth regulator, while prohexadione is mentioned as one of the growth regulators.

Further, WO2010149504 describes the use of a mixture comprising a variety of active compounds that may comprise prohexadion, for enhancing harvest security of crops needing vernalization, further actives may be added, while one of the further actives may be prothioconazole.

It would be preferred to use a growth regulator and a fungicide that enhances the growth regulatory activity.

It is therefore an object of the invention to provide a combination of a growth regulator and a fungicide with enhanced efficacy for agricultural use.

It is furthermore an object of the invention to provide a use of the inventive combination on certain crops.

It is furthermore an object of the invention to provide an efficient formulation of said combination.

### Summary of the invention

A method is provided for treating plants with at least one growth regulator and at least one fungicide, wherein a water based spraying liquid is sprayed on plants in an amount of 80 L to 500 L per hectare, wherein the plants are broad acre crop chosen from rape seed or cereal, wherein the spraying liquid comprises water and a suitable amount of the growth regulator prohexadione calcium, and the fungicide prothioconazole wherein the amount of prohexadione calcium is between 20 and 400 gram per hectare,
and wherein the amount of prothioconazole is between 50 and 200 g/ha. If the crop is cereal, preferably, the cereal is chosen from barley, oat, wheat, rye, triticale, grain or corn.

Preferably for rape seed type crop, prohexadion-calcium is used as growth regulator.

The third objective is related to a liquid dispersion comprising:
- the growth regulator prohexadione calcium;
- the fungicide prothioconazole;
- an organic hydrophobic carrier chosen from a vegetable oil;
- wherein more than about 90% of the particles of said growth regulator and said fungicide have a particle size of between 1-7 µm;
- wherein the dispersion further comprises an emulsifier which stabilizes the dispersion in the organic carrier, and wherein the emulsifier is non-ionic, and comprises at least one fatty acid group, at least one polyethoxy group, or more than one ethoxy group, and at least one polyol, wherein the fatty acid and polyol may be combined in hydroxyl-fatty acid;
- at least one additive to reduce settling
- wherein the dispersion is essentially water free.

Apart from the oil-dispersion according the third objective, the two actives may be supplied separately, or together in one formulation. Several types of formulations exist, and for example granules having at least two actives are suitable for the invention. Yet, the oil dispersion is preferred because of the much faster mixing characteristics.

Unexpectedly, the combination of the growth regulator that acts on the gibberilic acid pathway by virtue of mimicking 2-glutaric acid (and thereby interfering with the late steps of GA synthesis), combined with the fungicide being an inhibitor of a sterol biosynthesis show a synergistic effect in length retardation, and thereby allowing more energy in the plants to be used for leaves and seeds as enhanced growth control leads to less lodging and less risk of losing yield.

In another embodiment, the two actives are supplied in one formulation, simplifying the application by the farmer. The one formulation can take several forms, such as dispersible or dissolvable granules, liquid dispersion, solutions and the like. Preferably, the formulation is a liquid, oil based dispersion.

The fungicide can be obtained and used in their commercially available form, if not provided in a combination product with the growth regulator.

The invention further relates to the use of the fungicide prothioconazole to enhance the growth regulation effect of prohexadione calcium.

### Detailed description of the invention

The invention provides a method for treating plants with at least one growth regulator and at least one fungicide, wherein a water based spraying liquid is sprayed on plants in an amount of 80 L to 500 L per hectare, wherein the plants are broad acre crop chosen from rape seed or cereal, wherein the spraying liquid comprises water and a suitable amount of the growth regulator prohexadione calcium, and the fungicide prothioconazole, wherein the amount of prohexadione calcium is between 20 and 400 g per hectare and wherein the amount of prothioconazole is between 50 and 200 g/ha.

Preferably for rape seed type crop, prohexadion-calcium is used as growth regulator.

Prohexadione (used as prohexadione-Ca-salt) can be supplied as granules, as for example described in WO2011/012495. Preferably, prohexadione-Ca-salt is used as a liquid, oil based dispersion, as described in WO2015/024995.

The fungicides can be supplied as dispersion concentrates or other forms, commercially available.

Preferably, the growth regulator is applied in an amount between 50 and 200 g per hectare.

In a preferred embodiment, the ratio between the growth regulator and the fungicide is between 1:0.6 to 1:4, preferably 1:1 to 1:3.

As shown in the examples, the combination of the growth regulator and fungicide provides for an unexpected reduction in stem length. Hence, in particular in the water based spraying liquid, the amounts of growth regulator and fungicide are such to show a synergistic effect on stem length retardation.

The spraying liquid may contain further additionally, one or more growth regulators, fungicides, metal compounds, penetrating agents and/or one or more jasmonates.

In a preferred embodiment, the spraying liquid comprises additional active compounds or additives. For example, such additional active compound may be stable and soluble in water and is preferably delivered to the farmer as concentrated solution in water. Hence, additives or additional active components, to be used in combination with the growth regulator and the fungicide can be added directly to the water phase.

The spraying liquid preferably also comprises emulsifiers and the like, penetration enhancers etc, like for example an aliphatic amine compound, such as for example N,N-dimethyl decanamide or N-decyl-N-methyl-formamlde. The amount of penetration enhancer can be about 0.3 to 20 times the amount of active components (growth regulator plus fungicide), preferably 1-5 times the amount of active components..

The spraying liquid may further comprise additional growth regulators. Preferred additional growth regulators include one or more of chlormequat, ethephon, mepiquat, gibberellins, an auxin and/or cytokinin.

Suitable auxins include natural or synthetic chemicals that behave like the naturally occurring auxins produced by plant enzyme systems, and the term "auxin" and "auxins" as used herein refers to such compounds in natural and synthetic form. Indoleacetic acids, indol-3-butyric acid (3-BA); naphthaleneacetamide; 2 methyl-1-naphthaleneacetic acid and 2-methyl-1-naphthylacetamide have hormonal activity and may be substituted for the naturally occurring auxins. It may be useful to have metal ions present with the auxins, such as for example zinc or manganese. In preferred embodiments, the auxin employed is selected from the group consisting of 3-indolebutyric acid, 3-indoleacetic acid, 1-naphthylacetic acid, 3-indolebutyric acid, and salts and esters thereof. Preferably, the metal ions required for a good activity are supplied together with the auxin.

Suitable cytokinins are a class of plant regulation substances (phytohormones) that promote cell division, or cytokinesis, in plant roots and shoots. There are two types of cytokinins: adenine-type cytokinins represented by kinetin, zeatin, and 6-benzylaminopurine (also referred to as BAP, 6-BAP, or 6-benzyladenine), and phenylurea-type cytokinins like diphenylurea and thidiazuron (TDZ). In preferred embodiments the cytokinin is selected from the group consisting of kinetin (synthetic or derived from seaweed), 6-BAP, 1-(2-chloropyridin-4-yl)-3-phenylurea (CPPU), and TDZ. Suitable additional compounds include specific anti powdery mildew fungicides such as morfolines like fenpropidine and fenpropimorf, metrafenone, cyflufenamide, quinoxyfen and proquinazid; SBI fungicides like triazoles like epoxyconazol, etc, other than the ones mentioned above; Strobilurines (QoI fungicides) like coumoxystrobin, dimoxystrobin, enoxastrobin, famoxadone, fenamidone, fenaminostrobin, fluoxastrobin, flufenoxystrobin, kresoxim-methyl, metominostrobin, orysastrobin, pyraoxystrobin, pyraclostrobin, pyrametastrobin, pyribencarb, triclopyricarb trifloxystrobin and SDHI like fungicides like benodanil, bixafen, carboxin, fenfuram, fluopyram, flutolanil, fluxapyroxad, furametpyr, isopyrazam, mepronil, oxycarboxin, penflufen, penthiopyrad, sedaxane and thifluzamid.

Suitable further compounds that can be added are jasmonates or phosphonicacid, which strengthen the defence mechanisms of the plants. Suitable jasmonates include methyl jasmonate, propyldihydrojasmoante and jasmonic acid.

Suitable further compounds that can be added are metal compounds, such as for example zinc, manganese, selenium, iron copper, boron, molybdenum, and magnesium and the like. The metal ions can be used as chelates or salts, like for example EDTA chelates, citrate salts, proteinates or otherwise in a form that the metals are absorbed by the plant leafs.

The spraying liquid is used in a method for treating plants with said growth regulator and said fungicide, wherein a water based spraying liquid is sprayed on plants in an amount of 80 L to 500 L per hectare, preferably 100 L to 400 L per hectare.

The spraying liquid is used on broad acre crop chosen from rape or cereal. If the crop is cereal, the cereal is preferably chosen from barley, oat, wheat, rye, triticale, grain or corn.

The invention also provides a granular composition, comprising
- the growth regulator prohexadione calcium;
- the fungicide prothioconazole
- wherein the amount of said growth regulator is 4 wt% or more and 50 wt% or less, and the amount of fungicide is 2 wt% or more and 50 wt% or less
- optionally at least one of a binder, a dispersion agent, and anticacking agent.

Such a composition is a convenient way to provide both actives together. Many formulations for liquid or solid compositions are known. Granular compositions are for example described in WO2002/829902 and WO2015/038917.

The invention also provides a liquid dispersion comprising:
- the growth regulator prohexadione calcium;
- the fungicide
   prothioconazole
- an organic hydrophobic carrier chosen from a vegetable oil;
- wherein more than 90% of the particles of said growth regulator have a particle size of between 1-7 µm;
- wherein the fungicide is dissolved in the liquid;
- wherein the dispersion further comprises an emulsifier which stabilizes the dispersion in the organic carrier, and wherein the emulsifier is non-ionic, and comprises at least one fatty acid group, at least one polyethoxy group, or more than one ethoxy group, and at least one polyol, wherein the fatty acid and polyol may be combined in hydroxyl-fatty acid;
- at least one additive to reduce settling
- wherein the dispersion is essentially water free.

Preferably, the dispersion comprises an amount of said growth regulator of 4 wt% or more and 40 wt% or less, and the amount of fungicide of 2 wt% or more and 40 wt% or less .

The dispersed particles generally have a small particle size. Generally, more than 90% of the particles of said growth regulator will have a particle size of 1-7 µm or less, preferably 5 µm or less.

The fungicide prothioconazole is soluble in the vegetable oil.

The dispersion further comprises an emulsifier which stabilizes the dispersion in the organic hydrophobic carrier (hereinafter also the oil dispersion), and which causes the concentrate to be water miscible and self-emulsifying when diluted in a suitable dilution in water. A suitable dilution is the dilution in which the dispersion will be used in practice. For testing purposes, it may be adequate to use for example a 1:50 dilution.

The emulsifier has several roles. The influence on the stability of the oil dispersion can be assessed by storage stability tests of the concentrate. The self-emulsifying property of the oil dispersion can be tested by adding a suitable amount of dispersion in water. For example, one could add 1 wt% of oil dispersion to water, and invert the vessel with the mixture a few times (i.e., turning the vessel upside down). Generally, a stable emulsion should have been formed when 8 times turning the vessel upside down, or less. Preferably, the dispersion is emulsified in water with inverting the vessel 4 times or less, preferably about two times or less. The precise structure of the emulsion in water is not so important, as long as the at least one active ingredient is well dispersed, and the mixture is stable. Generally, at least the oil forms an emulsion in the water phase. The at least one active may be dispersed, or dissolved in the water phase, and/or may be present in the oil as particles. Furthermore, the emulsifier may act as an adjuvant, promoting the uptake of the active ingredient into the plant.

The preferred dispersion is essentially water free, which means that preferably the oil dispersion contains less than 0.4 wt% water, more preferably 0.2 wt% or less, as can be measured with Karl Fisher titration.

Prohexadione Ca preferably is present in an amount of about 4 wt% or more, preferably 5 wt% or more. Generally, the amount will be 40 wt% or less preferably 30 wt% or less, more preferably 20 wt% or less. Suitable amounts include 10 wt% or less, like for example 8 wt% or less.

The preferred dispersion according the invention preferably comprises additionally an ammonium compound, such as for example ammonium nitrate, ammonium propionate, ammonium sulphate, or ammonium phosphate, preferably ammoniumsulphate. The ammonium sequestrates the calcium ion, which otherwise may hamper the uptake of the growth regulator by the plant. A cationic emulsifier, such as those described below, can also be used as ammonium compound.

The preferred dispersion according the invention furthermore, preferably comprises an acidifier, such as preferably an organic acid, like preferably citric acid, adipic acid or acetic acid.

The preferred dispersion of the invention preferably also comprises an aliphatic amine compound, such as for example N,N-dimethyl decanamide or N-decyl-N-methyl-formamide. Such amine compounds preferably are present in an amount between 5 and 25 wt% of the dispersion, more preferably between 10 and 25 wt%.

These salts and /or acids and/or amine compounds may be dispersed or dissolved in the oil phase according to their solubility properties.

The dispersion according to the present invention may further comprise additional growth regulators. Preferred additional growth regulators include one or more of chlormequat, ethephon, mepiquat, gibberellins, an auxin and/or cytokinin.

Suitable auxins include natural or synthetic chemicals that behave like the naturally occurring auxins produced by plant enzyme systems, and the term "auxin" and "auxins" as used herein refers to such compounds in natural and synthetic form. Indoleacetic acids, indol-3-butyric acid (3-BA); naphthaleneacetamide; 2 methyl-1-naphthaleneacetic acid and 2-methyl-1-naphthylacetamide have hormonal activity and may be substituted for the naturally occurring auxins. It may be useful to have metal ions present with the auxins, such as for example zinc or manganese. In preferred embodiments, the auxin employed is selected from the group consisting of 3-indolebutyric acid, 3-indoleacetic acid, 1-naphthylacetic acid, 3-indolebutyric acid, and salts and esters thereof. Preferably, the metal ions required for a good activity are supplied together with the auxin.

Suitable cytokinins are a class of plant regulation substances (phytohormones) that promote cell division, or cytokinesis, in plant roots and shoots. There are two types of cytokinins: adenine-type cytokinins represented by kinetin, zeatin, and 6-benzylaminopurine (also referred to as BAP, 6-BAP, or 6-benzyladenine), and phenylurea-type cytokinins like diphenylurea and thidiazuron (TDZ). In preferred embodiments the cytokinin is selected from the group consisting of kinetin (synthetic or derived from seaweed), 6-BAP, 1-(2-chloropyridin-4-yl)-3-phenylurea (CPPU), and TDZ.

Preferably, the carrier material is a vegetable oil with a melting point of about 10 °C or lower, preferably of about 0 °C or lower. Suitable vegetable oils are e.g. palm oil, soybean oil, rapeseed oil, sunflower oil, cotton seed oil, palm kernel oil, coconut oil, linseed oil, olive oil, peanut oil and the like. Suitable derivatives of vegetable oils include alkyl esters of the fatty acids, like for example C₁-C₆-alkyl esters, like for example bio-diesel, or methyl esters of rape seed oil and the like.

The dispersion according to the invention contains an emulsifier as an important ingredient. The emulsifier acts as a dispersant to enhance the dispersibility of the insoluble particles of the growth regulator initially and to enhance the storage stability of the dispersion. The emulsifier also aids in the dispersion of the growth regulator particles on dilution in water and thirdly the emulsifier aids in the emulsification of the carrier fluid in the water phase.

Preferably, the emulsifier is an alkoxylated sugar, preferably esterified with fatty acids. Suitable sugars, or polyols, are pentaeritritol, sorbitol, maltose, trimethylolpropane, ethyleneglycol and the like. The alkoxygroups preferably are ethyloxy or propyloxy, and most preferably at least comprise at least 3 ethoxy groups, preferably at least 5 ethoxy groups. Esterification with fatty acids may comprise esterification with C₁₂-C₂₄ fatty acids, wherein the fatty acids may be unsaturated, and preferably are monounsaturated. The inventors have found the ethoxylated sorbitans to be most preferred emulsifiers. Examples of such ethoxylated esterified sorbitans are Atlas G 1086, Atlas G 1096, Arlatone TV. Further suitable dispersants are Atlox 4912, Atlox 4914 and Atlox LP-1, which comprise ethoxylated polyhydroxystearic acid, copolymers of fatty acid. Further suitable emulsifiers include alcohol-alkylene oxide addition products, such as tridecyl alcohol-C16 ethoxylate; ethoxylated fatty acids such as castor oil ethoxylate (EO 25 or 40) and polyethylene glycol esters of fatty acids, such as polyethyleneglycol stearate.

Hence, the preferred emulsifier is non-ionic, and comprises at least one fatty acid group, at least one polyethoxy group, or more than one ethoxy group, and at least one polyol (diol, triol or higher alcohol), wherein the fatty acid and polyol may be combined in hydroxyl-fatty acid.

It may be useful to use more than one emulsifier. Suitable additional emulsifiers are anionic, cationic or further nonionic emulsifiers.

Typical emulsifiers, or surface-active agents, are alkyl sulphate salts, such as diethanol ammoniumlaurate sulphate, alkylarylsulphonate salts, such as like calcium dodecyl benzene sulphonate, alkylphenol-alkylene oxide addition products, such as nonylphenol-C18 ethoxylate; alcohol-alkylene oxide addition products, such as tridecyl alcohol-C16 ethoxylate; ethoxylated fatty acids such as castor oil ethoxylate (EO 25 or 40), soaps such as sodium stearate; alkylnaphthalene-sulphonate salts such as sodium dibutylnaphthalenesulphonate; dialkylesters of sulphosuccinate salts, such as sodium di(2-ethylhexyl) sulpho-succinate; sorbitol esters such as sorbitol oleate; quaternary amines, such as lauryl trimethylammonium chloride; polyethylene glycol esters of fatty acids, such as polyethyleneglycol stearate; block-copolymers of ethyleneoxide and propylenenoxide; salts of mono and dialkyl phosphate esters; polyamine-fatty acid condensates; random polyester condensates; lecitine or modified lecitines; mono- or di-glycerides and the like.

The amount of emulsifier is generally 10 wt% or more, preferably 15 wt% or more. Generally, the amount will be 30 wt% or less. Suitable amounts include 18 wt%, 20 wt% or 22 wt%. The amount is the total amount of the combined emulsifiers.

The dispersion according the invention may comprise further components, such as for example at least one of a further growth regulator, a fungicide, an anti-settling agent, an antioxidant, a biocide, an antifoam, a metal compound, or another additive known in the art like safeners, colorants and the like.

The dispersion according to the present invention may further comprise a fungicide other than the fungicide already present. Preferably, one or more of the following fungicides is used: Specific anti powdery mildew fungicides such asmorfolines like fenpropidine and fenpropimorf, metrafenone, cyflufenamide, quinoxyfen and proquinazid; SBI fungicides like triazoles like epoxyconazol; Strobilurines (QoI fungicides) like coumoxystrobin, dimoxystrobin, enoxastrobin, famoxadone, fenamidone, fenaminostrobin, fluoxastrobin, flufenoxystrobin, kresoxim-methyl, metominostrobin, orysastrobin, pyraoxystrobin, pyraclostrobin, pyrametastrobin, pyribencarb, triclopyricarb trifloxystrobin and SDHI like fungicides like benodanil, bixafen, carboxin, fenfuram, fluopyram, flutolanil, fluxapyroxad, furametpyr, isopyrazam, mepronil, oxycarboxin, penflufen, penthiopyrad, sedaxane and thifluzamid.

Suitable further compounds that can be added are jasmonates or phoshonic acid, which strengthen the defence mechanisms of the plants. Suitable jasmonates include methyl jasmonate, propyldihydrojasmoante and jasmonic acid.

Suitable further compounds that can be added are metal compounds, such as for example zinc, manganese, selenium, iron copper, boron, molybdenum, and magnesium and the like. The metal ions can be used as chelates or salts, like for example EDTA chelates, citrate salts, proteinates or otherwise in a form that the metals are absorbed by the plant leafs.

The dispersion according to the present invention further comprises at least one additive to reduce settling. Preferred anti-settling agents include silica (like fumed silica) or clay (like bentonite). The amount of anti-settling agent preferably is 5 wt% or less, preferably 3 wt% or less, and even more preferred, 2 wt% or less, like for example about 1 wt%. Other anti-settling agents include polymers, like for example polyester block copolymers or polyamides, such as for example Atlox Rheostrux type polymers. These additives to reduce settling are generally used in an amount of 10 wt% or less, preferably 5 wt% or less and can be e.g. 3 wt% or less. The additive will generally be used in an amount of 0.3 wt% or more, like for example 0.5 wt% or more, and more preferably 1 wt% or more.

The dispersion according the invention may further include an anti-oxidant, such as for example vitamin-E, butylated hydroxyanisole, Vulkanox BHT (2,6-di-tert.-butyl-p-cresol) or butylhydroxytoluene.

The dispersion of the invention may further include an antifoam such as silicone based oils, magnesiumstearate or octanol.

The dispersion according the invention may further include a biocide, like a bactericide and/or algicide, like for example isothiazolin-3 derivatives, like benzyl-isothiazolin, n-octyl isothiazolinone, chloro-methyl and methyl isothiazolinone; bromo-nitro-propane-diol; ethylenedioxydimethanol; (3-(3,4-dichlorophenyl)-1,1-dimethylurea; iodo-propynyl butyl carbamate; N-trichloromethylthiophtalimide; Zinc Pyrithione; dichlorophen, streptomycin, coppersulphate, or sorbate.

The further compounds - if solids - may be micronized, or may be used as larger particle sizes. Preferably, the particle size of all the solid components in the oil dispersion is about 30 µm or less, more preferably, about 20 µm or less, and even more preferably, about 12 µm or less, and most preferably between about 1-7 µm.

The dispersion as described above is suitable to be diluted to obtain a water based spraying liquid for spraying plants.

Such water based spraying liquid comprises water and a suitable amount of dispersion. Further, other additives, actives etc. may be present, which can be separately mixed with the water.

A suitable dilution comprises 96 wt% water or more and 4 wt% of said dispersion or less. Preferably, the dispersion is diluted with water in a range of 1:50 to 1:200 (in volume/volume). Suitable amounts of dispersion in water include 1 wt%, 1.25 wt% and 1.5 wt%.

The plants are broad acre crop chosen from rape (*Brassic napus*) or cereal, and if the crop is cereal, the cereal is preferably chosen from barley, oat, wheat, rye, triticale, grain or corn.

Preferred crop plants belong to the plant genus *Brassica* include; *Brassica napus* comprising winter rapeseed, summer rapeseed, and several mustard species. *Brassica napus* is most preferred.

### Examples A-D and 1-2

In the following examples, FAL2023 was used, comprising 5 wt% prohexadione-Ca as active ingredient in an oil based dispersion, and prepared in
accordance with WO-2015/024995. As the prothioconazole, Joao (from Bayer Crop Science was used, which is an emulsifiable concentrate having 25 wt% active.

Rape seed was sprayed with a volume of 200 L/hectare, on 10 March, when the height was on average 6.8 cm, with compounds as shown in the following table. The table also includes the results.

| **Example** | A | B | C | 1 | D | 2 |
|---|---|---|---|---|---|---|
| Treatment | | | | | | |
| Prohexadion-Ca (g/ha) | - | 75 | - | 75 | 50 | 50 |
| Prothioconazol (g/ha) | - | - | 175 | 175 | - | 175 |
| Height at 4 April (cm) | 65 | 58.3 | 62.3 | 53.5 | 61.8 | 58.5 |
| Length reduction (cm) | | 6.7 | 2.7 | 11.5 | 3.2 | 6.5 |
| Length reduction over two actives separately (cm) and additional reduction over additive effect (%) | | | | 2.1 | | 0.6 |
| | | | | 22% | | 10% |

These results show that the length of the rapeseed plants was reduced more, than the additive effect of the two actives.

## Claims

1. Method for treating plants with at least one growth regulator and at least one fungicide, wherein a water based spraying liquid is sprayed on plants in an amount of 80 L to 500 L per hectare, wherein the plants are broad acre crop chosen from rape seed or cereal, and wherein the spraying liquid comprises water and a suitable amount of the growth regulator prohexadione-calcium, and the fungicide prothioconazole;
- wherein the amount of prohexadione-calcium is between 20 and 400 g per hectare
- and wherein the amount of prothioconazole is between 50 and 200 g/ha.

2. Method according to claim 1, wherein the amount of growth regulator is between 50 and 200 g per hectare, and wherein the ratio between the growth regulator and the fungicide is between 1:0.6 to 1:4.

3. Method according to claim 2, wherein the ratio between the growth regulator and the fungicide is between 1:1 to 1:3.

4. Method according to any one of the preceding claims, wherein the amounts of said growth regulator and said fungicide are such to show a synergistic effect on stem length retardation.

5. Method according to any one of the preceding claims, wherein the spraying liquid further comprises additionally, one or more growth regulators, fungicides, metal compounds, penetrating agents, and/or one or more jasmonates.

6. Method according to any one of the preceding claims, wherein the liquid further comprises at least one of an aliphatic amino compound, an ammonium salt or a carboxylic acid.

7. A granular composition, comprising
- the growth regulator prohexadione calcium;
- the fungicide prothioconazole,
- wherein the amount of said growth regulator is 4 wt% or more and 50 wt% or less, and the amount of fungicide is 2 wt% or more and 50 wt% or less
- optionally at least one of a binder, a dispersion agent, and anticacking agent.

8. A liquid dispersion comprising:
- the growth regulator prohexadione calcium;
- the fungicide prothioconazole;
- an organic hydrophobic carrier chosen from a vegetable oil;
- wherein more than 90% of the particles of said growth regulator have a particle size of between 1-7 µm;
- wherein the fungicide is dissolved in the liquid;
- wherein the dispersion further comprises an emulsifier which stabilizes the dispersion in the organic carrier, and wherein the emulsifier is non-ionic, and comprises at least one fatty acid group, at least one polyethoxy group, or more than one ethoxy group, and at least one polyol, wherein the fatty acid and polyol may be combined in hydroxyl-fatty acid;
- at least one additive to reduce settling
wherein the dispersion is essentially water free, and wherein the amount of said growth regulator is 4 wt% or more and 40 wt% or less, and the amount of fungicide is 2 wt% or more and 40 wt% or less.

9. Use of the fungicide prothioconazole to enhance the growth regulation effect of prohexadione calcium.

## Patentansprüche

1. Verfahren zum Behandeln von Pflanzen mit wenigstens einem Wachstumsregulator und wenigstens einem Fungizid, wobei eine Sprühflüssigkeit auf Wasserbasis in einer Menge von 80 L bis 500 L pro Hektar auf Pflanzen gesprüht wird, wobei die Pflanzen großflächig angebaute Kulturpflanzen sind, die aus Raps oder Getreide ausgewählt sind; und wobei die Sprühflüssigkeit Wasser und eine geeignete Menge des Wachstumsregulators Prohexadion-Calcium und des Fungizids Prothioconazol umfasst;
- wobei die Menge an Prohexadion-Calcium zwischen 20 und 400 g pro Hektar beträgt
- und wobei die Menge an Prothioconazol zwischen 50 und 200 g/ha beträgt.

2. Verfahren nach Anspruch 1, wobei die Menge an Wachstumsregulator zwischen 50 und 200 g pro Hektar beträgt und wobei das Verhältnis zwischen dem Wachstumsregulator und dem Fungizid zwischen 1 : 0,6 bis 1 : 4 beträgt.

3. Verfahren nach Anspruch 2, wobei das Verhältnis zwischen dem Wachstumsregulator und dem Fungizid zwischen 1 : 1 bis 1 : 3 beträgt.

4. Verfahren nach einem der vorhergehenden Ansprüche, wobei die Mengen des Wachstumsregulators und des Fungizids derart sind, dass sie eine synergistische Wirkung auf die Stengellängenverzögerung zeigen.

5. Verfahren nach einem der vorhergehenden Ansprüche, wobei die Sprühflüssigkeit ferner zusätzlich einen oder mehrere Wachstumsregulatoren, Fungizide, Metallverbindungen, Penetrationsmittel und/oder ein oder mehrere Jasmonate umfasst.

6. Verfahren nach einem der vorhergehenden Ansprüche, wobei die Flüssigkeit ferner eine aliphatische Aminoverbindung, ein Ammoniumsalz und/oder eine Carbonsäure umfasst.

7. Granuläre Zusammensetzung, die Folgendes umfasst:
- den Wachstumsregulator Prohexadion-Calcium;
- das Fungizid Prothioconazol,
- wobei die Menge des Wachstumsregulators wenigstens 4 Gew.-% und höchstens 50 Gew.-% beträgt und die Menge des Fungizids wenigstens 2 Gew.-% und höchstens 50 Gew.-% beträgt
- optional ein Bindemittel, ein Dispersionsmittel und/oder ein Antiklumpmittel.

8. Flüssige Dispersion, die Folgendes umfasst:
- den Wachstumsregulator Prohexadion-Calcium;
- das Fungizid Prothioconazol;
- eine organische hydrophobe Trägersubstanz, die aus einem Pflanzenöl ausgewählt ist;
- wobei mehr als 90 % der Partikel des Wachstumsregulators eine Partikelgröße von zwischen 1-7 µm aufweisen;
- wobei das Fungizid in der Flüssigkeit gelöst ist;
- wobei die Dispersion ferner einen Emulgator umfasst, der die Dispersion in der organischen Trägersubstanz stabilisiert, und wobei der Emulgator nichtionisch ist und wenigstens eine Fettsäuregruppe, wenigstens eine Polyethoxygruppe oder mehr als eine Ethoxygruppe, und wenigstens ein Polyol umfasst, wobei die Fettsäure und das Polyol in Hydroxyl-Fettsäure kombiniert werden können;
- wenigstens ein Additiv, um ein Absetzen zu reduzieren
wobei die Dispersion im Wesentlichen wasserfrei ist und wobei die Menge des Wachstumsregulators wenigstens 4 Gew.-% und höchstens 40 Gew.-% beträgt und die Menge des Fungizids wenigstens 2 Gew.-% und höchstens 40 Gew.-% beträgt.

9. Verwendung des Fungizids Prothioconazol, um die wachstumsregulierende Wirkung von Prohexadion-Calcium zu verstärken.

## Revendications

1. Procédé de traitement de plantes avec au moins un régulateur de croissance et au moins un fongicide, dans lequel un liquide de pulvérisation à base d'eau est pulvérisé sur les plantes en une quantité de 80 L à 500 L par hectare, dans lequel les plantes sont des plantes de culture de grande étendue choisies parmi les graines de colza ou céréales ; et dans lequel le liquide de pulvérisation comprend de l'eau et une quantité appropriée du régulateur de croissance prohexadione-calcium, et du fongicide prothioconazole ;
- dans lequel la quantité de prohexadione-calcium est comprise entre 20 et 400 g par hectare
- et dans lequel la quantité de prothioconazole est comprise entre 50 et 200 g/ha.

2. Procédé selon la revendication 1, dans lequel la quantité de régulateur de croissance est comprise entre 50 et 200 g par hectare, et dans lequel le rapport entre le régulateur de croissance et le fongicide est compris entre 1:0,6 à 1:4.

3. Procédé selon la revendication 2, dans lequel le rapport entre le régulateur de croissance et le fongicide est compris entre 1:1 et 1:3.

4. Procédé selon l'une quelconque des revendications précédentes, dans lequel les quantités dudit régulateur de croissance et dudit fongicide sont telles qu'elles présentent un effet synergique sur le retard de la longueur des tiges.

5. Procédé selon l'une quelconque des revendications précédentes, dans lequel le liquide de pulvérisation comprend en outre, en plus, un ou plusieurs régulateurs de croissance, fongicides, composés métalliques, agents pénétrants et/ou un ou plusieurs j asmonates.

6. Procédé selon l'une quelconque des revendications précédentes, dans lequel le liquide comprend en outre un composé amino aliphatique, et/ou un sel d'ammonium et/ou un acide carboxylique.

7. Composition granulaire, comprenant
- le régulateur de croissance prohexadione calcium ;
- le fongicide prothioconazole,
- dans lequel la quantité dudit régulateur de croissance est de 4 % en poids ou plus et de 50 % en poids ou moins, et la quantité de fongicide est de 2 % en poids ou plus et de 50 % en poids ou moins
- éventuellement un liant, et/ou un agent de dispersion et/ou un agent antimottant.

8. Dispersion liquide comprenant :
- le régulateur de croissance prohexadione calcium ;
- le fongicide prothioconazole ;
- un support organique hydrophobe choisi parmi une huile végétale ;
- dans lequel plus de 90 % des particules dudit régulateur de croissance ont une taille de particules comprise entre 1 et 7 µm ;
- dans lequel le fongicide est dissous dans le liquide ;
- dans lequel la dispersion comprend en outre un émulsifiant qui stabilise la dispersion dans le support organique, et dans lequel l'émulsifiant est non ionique, et comprend au moins un groupe acide gras, au moins un groupe polyéthoxy, ou plus d'un groupe éthoxy, et au moins un polyol, dans lequel l'acide gras et le polyol peuvent être combinés dans un acide gras hydroxyle ;
- au moins un additif pour réduire la décantation
dans lequel la dispersion est essentiellement exempte d'eau, et dans lequel la quantité dudit régulateur de croissance est de 4 % en poids ou plus et de 40 % en poids ou moins, et la quantité de fongicide est de 2 % en poids ou plus et de 40 % en poids ou moins.

9. Utilisation du fongicide prothioconazole pour renforcer l'effet de régulation de croissance du prohexadione calcium.
